# EUROPÄISCHE PATENTSCHRIFT

(11) **EP 3 414 195 B1**
(45) Veröffentlichungstag und Bekanntmachung des Hinweises auf die Patenterteilung: **06.11.2024**
(21) Anmeldenummer: 16703539.3
(22) Anmeldetag: 08.02.2016
(51) Int. Cl.: B65G 51/04, A61J 1/14, B01L 3/00, A61B 5/15, B65G 51/06

(54) **VIAL UND VERFAHREN ZUM TRANSPORT VON VIALS**
VIAL AND METHOD FOR TRANSPORTING VIALS
FLACON ET PROCÉDÉ DE TRANSPORT DE FLACONS

(43) Veröffentlichungstag der Anmeldung: 19.12.2018
(73) Patentinhaber: Nolato Treff AG Degersheim, 9113 Degersheim (CH)
(72) Erfinder: SCHERRER, Jörg, 9113 Degersheim (CH); CRAMER, Philipp, 8640 Rapperswil (CH); BRÜSTLE, Werner, 6890 Lustenau (AT); WIESLI, Richard, 9053 Teufen (CH)
(74) Vertreter: Hepp Wenger Ryffel AG
(86) Internationale Anmeldenummer: PCT/EP2016/052629
(87) Internationale Veröffentlichungsnummer: WO 2017/137062

(56) Entgegenhaltungen:
- EP-A2- 1 325 875
- WO-A1-2009/036186
- JP-A- S60 232 323
- US-A- 6 015 246
- US-A1- 2009 257 922
- US-A1- 2012 141 341

## Beschreibung

Die vorliegende Erfindung betrifft Vials, ein Verfahren zum Transport von Vials sowie die Verwendung von Vials nach den unabhängigen Ansprüchen.

Vials werden unter anderem für die Aufbewahrung, die Analyse und den Transport von chemischen und biologischen Samples verwendet. Der Transport kann dabei beispielsweise über luftstrombetriebene Rohrpostsysteme geschehen. Dazu werden die Vials hermetisch verschlossen und mit Hilfe von Luftstrom über die Rohre des Systems versendet. Ähnliche Systeme sind in grösserer Ausführung beispielsweise aus Krankenhäusern zum Versand von Proben oder Krankenakten bekannt.

Vorzugsweise werden die Vials in solchen luftstrombetriebenen Rohrpostsystemen zu einem Analysegerät gesendet. Der Luftstrom kann entweder durch Druckluft oder durch ein Vakuum bereitgestellt werden. Dort wird vorzugsweise automatisch eine Probe mit Hilfe einer Kanüle entnommen. Das Vial wird danach, je nach Bedarf, in den Abfall oder eine Aufbewahrungsstelle gesendet.

An die Vials sind für die Beförderung in automatisierten Rohrpostsystemen gewisse Anforderungen gestellt. So muss der Verschluss der Vials eine automatisierte Probeentnahme erlauben. Zudem muss der Verschluss sicherstellen, dass der Inhalt nicht ungewollt austritt. Eine Kontamination des Systems durch ein Sample wäre verheerend, da beispielsweise eine Kreuzkontamination mit anderen Samples nicht mehr ausgeschlossen werden könnte.

JPS60232323 A offenbart ein Vial zur Verwendung in einem luftstrombetriebenen Rohrpostsystem.

Es ist daher eine Aufgabe der vorliegenden Erfindung, Vials bereitzustellen, welche für die Verwendung in luftstrombetriebenen Rohrsystemen geeignet sind. Diese Aufgabe wird mit Vials der unabhängigen Ansprüche gelöst.

Das Vial umfasst einen Körper und einen Deckel. Der Körper weist ein offenes Ende und ein geschlossenes Ende auf. Der Deckel ist zumindest teilweise in das offene Ende des Körpers einbringbar, um den Körper zu verschliessen. Weiter umfasst der Deckel zumindest eine Kunststoffkomponente, welche so ausgebildet ist, dass sie nach einer Penetration mit einer Kanüle mit einem Durchmesser von bis zu 2 mm mindestens bis 2 bar Innendruck dicht ist.

Der Deckel und der Körper sind vorzugsweise so ausgebildet, dass das Vial in geschlossenem Zustand (d.h. vor der ersten Penetration) mindestens bis 5 bar Innendruck dicht ist. Durch einen dichten Deckel wird verhindert, dass der Inhalt des Vials austritt, wenn das Vial mittels Luftstrom transportiert wird. Der Deckel soll dabei so ausgebildet sein, dass er auch gegenüber Kapillar- bzw. Kriechkräften dicht ist.

Die mindestens eine Kunststoffkomponente weist eine Shore-Härte auf, welche eine Penetration mit einer Kanüle erlaubt und den Durchstich nach Entfernung der Kanüle automatisch wieder verschliesst. Der Deckel ist nach der Penetration mit einer Kanüle von ungefähr 2 mm immer noch bis mindestens 2 bar Innendruck dicht. Dadurch wird auch nach einer ersten Sampleentnahme eine hermetische Dichtung ohne Risiko einer Kontamination des Rohrpostsystems sichergestellt. Das Vial ist dabei vorzugsweise so ausgebildet, dass der Deckel auch nach mehrmaliger Penetration bis mindestens 2 bar Innendruck dicht ist.

Vorzugsweise weist der Deckel zwei Kunststoffkomponenten auf oder besteht aus zwei Kunststoffkomponenten. Die zwei Komponenten unterscheiden sich in ihrer Shore-Härte. Die Komponente mit der niedrigeren Shore-Härte ist in einem Bereich des Deckels radial innerhalb der Komponente mit der höheren Shore-Härte angeordnet. Zudem ist die shore-härtere Komponente zumindest in einem Bereich des Deckels, welcher in den Körper einbringbar ist, in Umfangsrichtung ohne Unterbrechung ausgebildet.

Die Komponente mit der niedrigeren Shore-Härte erlaubt die Penetration mit der Kanüle und anschliessender Abdichtung gegenüber einem Innendruck, wie vorgängig beschrieben. Die shore-härtere Komponente verleiht dem Deckel durch die ununterbrochene Ausbildung zumindest im Bereich, welcher in den Körper eingeführt wird, zusätzliche Stabilität. Durch die erhöhte Stabilität kann die Dichtheit des Deckels wiederum erhöht werden. So bleibt beispielsweise durch die shore-härtere Komponente die Anpresskraft zwischen Körper und Deckel auch nach längerer Lagerung im Wesentlichen gleich gross.

Falls die shore-härtere Komponente die radial äusserste Schicht darstellt, stellt sie einen Kontakt zwischen Körperinnenfläche und Deckelaussenfläche sicher, welcher den Inhalt des Vials gegen aussen abdichtet.

Alternativ kann eine zusätzliche Komponente radial ganz aussen, zumindest in dem Bereich, welcher in den Körper eingebracht wird vorhanden sein. Diese Schicht ist bevorzugt aus einem shore-weicheren Kunststoff als die umlaufend ausgebildete shore-härtere Komponente gebildet. Mit Hilfe der shore-weicheren Komponente kann wiederum eine erhöhte Dichtwirkung zwischen Deckel und Vial erreicht werden.

Die shore-weichere Komponente ist vorzugsweise zumindest teilweise in dem Bereich des Deckels, welcher in den Körper einbringbar ist, in Umfangsrichtung von der shore-härteren Komponente umgeben.

Durch eine derartige Anordnung ist der Deckel in dem Bereich, welcher in den Körper einbringbar ist stabil ausgebildet.

Die shore-weichere Komponente des Deckels kann über die gesamte Länge in Richtung Längsachse des Vials in Umfangsrichtung von der shore-härteren Komponente umgeben sein oder aber zumindest in einem Punkt des Deckels, welcher nicht in den Körper eingebracht wird, radial nach aussen verlaufen.

Die shore-weichere Komponente kann auch im Bereich, welcher in den Körper eingebracht wird, nur über eine gewisse Länge vorhanden sein. In einem Bereich ist dabei zum Beispiel nur die shore-härtere Komponente vorhanden, welche so einen Hohlraum bildet.

Es ist auch möglich, dass die shore-weichere Komponente beispielsweise am in Richtung geschlossenes Ende zeigenden Ende radial nach aussen läuft. Die shore-weichere Komponente kann somit nur über eine bestimmte Länge im Bereich, welcher innerhalb des Deckels anordnenbar ist, von der shore-härteren Komponente umgeben sein.

Bevorzugt ist die shore-härtere Komponente ein Polypropylen und die shore-weichere Komponente ein thermoplastisches Elastomer. Das thermoplastische Elastomer weist vorzugsweise eine Shore-Härte im Bereich von 35-48 Shore A, nach ISO 7619 gemessen, auf

Ein thermoplastisches Elastomer eignet sich gut für die geforderten Bedingungen. So erlaubt das thermoplastische Elastomer die Penetration mit der Kanüle. Weiter dichtet das thermoplastische Elastomer die Durchtrittstelle nach Entfernung der Kanüle wieder mit der gewünschten Dichtigkeit ab.

Andere Kunststoffe, welche die Penetrations- und Dichtungsanforderungen erfüllen, sind denkbar.

Bevorzugt weist die shore-weichere Komponente in einer Richtung senkrecht zu der Längsachse des Vials eine Dimension von 3-6 mm, bevorzugt 4.5 mm, auf. In Richtung der Längsachse weist sie bevorzugt eine Dimension von 1-4 mm, bevorzugt 2 mm, auf.

Mit den bevorzugten Dimensionen kann eine Abdichtung nach Durchtritt und Entfernung der Kanüle sichergestellt werden. Zudem eigen sich die Dimensionen gut für Vials, welche in Rohrpostsystemen zum Einsatz kommen.

Andere Dimensionen der shore-weicheren Komponente sind für Vials je nach Anforderungsprofil möglich.

Vorzugsweise beinhaltet der Körper des Vials Polypropylen oder besteht daraus.

Polypropylen eignet sich gut für Vials in luftstrombetriebenen Rohrpostsystemen, weil das Material sicherstellt, dass das Vial nicht zerbricht oder beschädigt wird. Zudem lassen sich Körper aus Polypropylen beispielsweise in einem Spritzgussverfahren herstellen. Polypropylen kann zudem so verarbeitet werden, dass keine Kanten oder Vorsprünge vorhanden sind, an welchen sich zwei Vials im System verhaken bzw. verzahnen könnten. Es sollte sichergestellt werden, dass ein solches Verhaken nicht auftritt, da dies einem reibungslosen Transport der Vials entgegenstehen könnte.

Alternativ sind auch andere Kunststoffe denkbar, welche eine kanten- und vorsprungfreie Produktion erlauben.

Der Deckel und der Körper sind vorzugsweise so ausgebildet, dass der Deckel und der Körper über einen Schnappverschluss in Wirkverbindung treten können.

Ein Formschluss über eine Schnappverbindung stellt sicher, dass der Deckel und der Körper fest miteinander verbunden sind. Es wird dadurch ein ungewolltes Öffnen des Vials verhindert.

Alternativ sind auch andere Verschlüsse denkbar. Beispielsweise könnte der Verschluss als Ratschenmechanismus so ausgebildet sein, dass ein Öffnen nach dem Verschliessen nicht mehr bzw. nur durch Beschädigung des Deckels möglich wäre.

Der Schnappverschluss wird bevorzugt durch eine Einkerbung in Umfangsrichtung im Deckel und einen komplementären Wulst im Körper gebildet.

Die Schnappverbindung stellt dabei einen druckresistenten Verschluss sicher. Zudem lässt sich ein Körper mit einem Wulst und ein Deckel mit einer Einkerbung verhältnismässig einfach herstellen.

Alternativ kann auch der Deckel einen Wulst und der Körper eine Einkerbung aufweisen.

Vorzugsweise ist zumindest eine äussere Oberfläche des Deckels, welche in den Körper einbringbar ist, sowie eine innere Oberfläche des Körpers, welcher mit dem Deckel in Kontakt kommen kann im Wesentlichen glatt ohne in Richtung der Längsachse des Vials verlaufende Kanten ausgebildet.

Glatt und kantenfrei ist dabei so zu verstehen, dass keine ungewollten Unebenheiten vorhanden sind. In Richtung der Längsachse sollten keine Kanten oder Einkerbungen vorhanden sein, da sonst Kapillaren entstehen können, durch welche das Sample fliessen bzw. kriechen kann. Diese glatten und kantenfreien Oberflächen stellen einen gut abdichtenden Kontakt sicher. Da die Lage der Vials innerhalb des Rohrsystems beliebig ist und sich auch beliebig ändern kann, soll sichergestellt werden, dass der Deckel in jeder Lage des Vials in der benötigten Grössenordnung dichtend ist.

Bevorzugt weist der Körper zumindest einen konisch zulaufenden Abschnitt auf der Aussenseite auf. Dieser konische Abschnitt weist das geschlossene Ende auf.

Eine solche Geometrie stellt wiederum sicher, dass keine Verhakung zwischen zwei Vials stattfindet. Zudem kann das Vial automatisch in eine korrekte Lage überführt werden, wenn die Lage mit Hilfe der Geometrie erkannt wird. So kann beispielsweise für eine Probeentnahme durch die Kanüle das Vial in eine aufrecht stehende Position gebracht werden.

Alternativ kann das Vial auch eine andere Geometrie aufweisen. So kann beispielsweise ein konischer Abschnitt auf der Aussenseite fehlen.

Vorzugsweise ist der Körper so ausgebildet, dass er eine Konizität in einem unteren Viertel von 10-15° aufweist und eine Konizität in einem oberen Teil von 1-5° aufweist.

Diese Winkel stellen einen reibungslosen Ablauf im Rohrsystem ohne Verhakung sicher.

Es ist auch möglich, dass nur das untere Viertel oder nur der obere Teil konisch ausgebildet sind.

Vorzugsweise weist der Körper an einer Aussenfläche einen Flansch am offenen Ende auf.

Ein Flansch ermöglicht ein einfaches Greifen des Vials mit einem gabelförmigen Trageelement. Das Trageelement sollte dabei so ausgebildet sein, dass ein Abstand der Zinken grösser ist als der Durchmesser des Vials unterhalb des Flansches, aber kleiner als der Durchmesser des Vials beim Flansch. So kann das Vial in die Zinken eingeführt und angehoben werden.

Zudem stellt der Flansch sicher, dass, falls ein Deckel mit einem grösseren Durchmesser als das Vial verwendet wird, keine zusätzliche Kante durch den Deckel gebildet wird. Der Flansch ist dazu vorzugsweise konisch ausgebildet, wobei der grösste Durchmesser am offenen Ende angeordnet ist. Dieser grösste Aussendurchmesser des Flansches sollte dabei dem Aussendurchmesser des Deckels entsprechen, damit keine zusätzliche Kante entsteht.

In einer bevorzugten Ausführungsform umfasst der Körper zwei Kunststoffkomponenten oder besteht daraus. Zumindest eine Komponente ist dabei voll deckend oder opak ausgebildet und am geschlossenen Ende des Körpers angeordnet. Diese zumindest eine voll deckende oder opake Komponente weist einen Code, vorzugsweise einen 2D-Barcode, besonders bevorzugt einen Data Matrix Code, zur Identifizierung auf.

Mit Hilfe des Codes kann das Vial und dadurch das Sample eindeutig gekennzeichnet und identifiziert werden. Dadurch kann das Vial einfach vollautomatisch gehandhabt werden und die Probe des Vials richtig zugewiesen werden. Zudem erlaubt ein solcher Code eine Anonymisierung des Vials bzw. des Samples.

Alternativ kann auch ein anderer Code als ein 2D Code verwendet werden, wie beispielsweise ein Farbcode.

Vorzugsweise beinhaltet die voll deckende oder opake Komponente Polypropylen oder besteht daraus.

Polypropylen erlaubt eine einfache Herstellung einer voll deckenden oder opaken Komponente. Zudem erlaubt es die Herstellung in einem 2 K Spritzgussverfahren, zusammen mit dem restlichen Körper.

Alternativ kann die voll deckende oder opake Komponente auch aus einem anderen passenden Material hergestellt werden.

Bevorzugt weist das Vial ein Aufnahmevermögen von maximal 350 µl auf.

Für Analysen werden oftmals nur einige Mikroliter vom Sample benötigt. Daher sollte das Vial kein allzu grosses Aufnahmevermögen aufweisen, damit nicht zu viel Sample benötigt wird. Bei einem grossen Aufnahmevermögen und wenig Sample besteht die Gefahr, dass sich das Sample im Vial so verteilt, dass eine Probeentnahme erschwert ist oder nicht mehr sichergestellt werden kann.

Je nach Anwendung sind jedoch auch Vials mit grösserem Aufnahmevermögen denkbar. So könnten beispielsweise auch Vials mit einem Aufnahmevermögen von mehreren Millilitern, beispielsweise 2,5 oder 5 ml in luftstrombetriebenen Rohrsystemen Anwendung finden.

Vorzugsweise wird der Deckel und/oder der Körper des Vials durch ein Spritzgussverfahren, vorzugsweise ein 2 K Spritzgussverfahren, hergestellt.

Ein Spritzgussverfahren erlaubt eine Herstellung der Teile des Vials mit gleichbleibender, hoher Qualität. Durch das 2 K Spritzgussverfahren können die Teile mit zwei Kunststoffkomponenten in einem Herstellungsprozess produziert werden.

Eine alternative erfindungsgemässe Ausführungsform betrifft ein Vial, welches wiederum einen Körper und einen Deckel umfasst. Dabei weist der Körper wiederum ein offenes Ende und ein geschlossenes Ende auf und der Deckel ist teilweise in das offene Ende des Körpers einbringbar, um den Körper zu verschliessen. Ein Hohlraum des Körpers weist im Bereich des geschlossenen Endes einen kleineren Durchmesser auf als in einem Bereich des offenen Endes.

Die Verkleinerung des Hohlraums kann kontinuierlich mit Hilfe eines konisch zulaufenden Abschnitts oder stufenweise geschehen. Es können auch sowohl Stufen als auch konische Abschnitte vorhanden sein. Die Konizität im unteren Bereich ist dabei vorzugsweise einiges stärker ausgebildet als in einem oberen Bereich. Vorzugsweise besitzt der untere Bereich einen Winkel von 10-45°, besonders bevorzugt 30°.

Der Hohlraum in einem unteren Bereich hat vorteilhaft einen mittleren Durchmesser von 20-70%, besonders vorteilhaft 50% des mittleren Durchmessers des oberen Bereichs.

Das Merkmal des kleineren Durchmessers im Bereich des geschlossenen Endes der alternativen Ausführungsform ist für sich alleine vorteilhaft, kann aber auch in allen Varianten der zuvor beschriebenen Ausführungsform vorhanden sein.

Durch die Verkleinerung des Durchmessers beim geschlossenen Ende, können Vials mit geringerem Aufnahmevermögen aber derselben Aussengeometrie wie Vials mit einem grösseren Aufnahmevermögen hergestellt werden. Dadurch können Vials mit unterschiedlichem Aufnahmevermögen innerhalb desselben Rohrsystems verwendet werden. Das luftstrombetriebene Rohrsystem stellt spezifische Anforderungen an die Dimensionen der Vials, damit ein reibungsloser Ablauf sichergestellt werden kann. Die Dimensionen sind von der Verwendung des Rohrsystems bzw. der Dimension der Rohre sowie der verwendeten Luftdrücke abhängig.

Zudem wird durch einen geringeren Durchmesser des Hohlraums am geschlossenen Ende eine Probeentnahme bei geringen Mengen vereinfacht. Das Sample wird im geringen Durchmesser eine höhere Füllhöhe erreichen als bei Vials mit grösserem Durchmesser. Dadurch kann mit Hilfe der Kanüle das Sample besser aufgenommen werden.

Die Verkleinerung des Hohlraums ist je nach gewünschter Füllmenge unterschiedlich stark ausgebildet.

Die Erfindung betrifft zudem ein Verfahren zum Transport von Vials in einem Röhrensystems mit Luftstrom. Im Verfahren wird eines der vorgehend beschriebenen Vials verwendet.

Des Weiteren betrifft die Erfindung die Verwendung eines der vorgehenden beschriebenen Vials in einem luftstrombetriebenen Röhrensystem.

Weitere vorteilhafte Ausgestaltungen der Erfindung ergeben sich aus der nachfolgenden Beschreibung der Ausführungsbeispiele in Kombination mit den schematischen Figuren. Es zeigen schematisch:
- Fig. 1a:: Einen Längsschnitt durch ein erfindungsgemässes Vial;
- Fig. 1b:: Eine Aussenansicht des Vials nach Fig. 1a;
- Fig. 2a:: Einen Längsschnitt durch ein weiteres erfindungsgemässes Vial;
- Fig. 2b:: Eine Aussenansicht des Vials nach Fig. 2a;
- Fig. 3:: Eine Aussenansicht eines weiteren erfindungsgemässen Vials

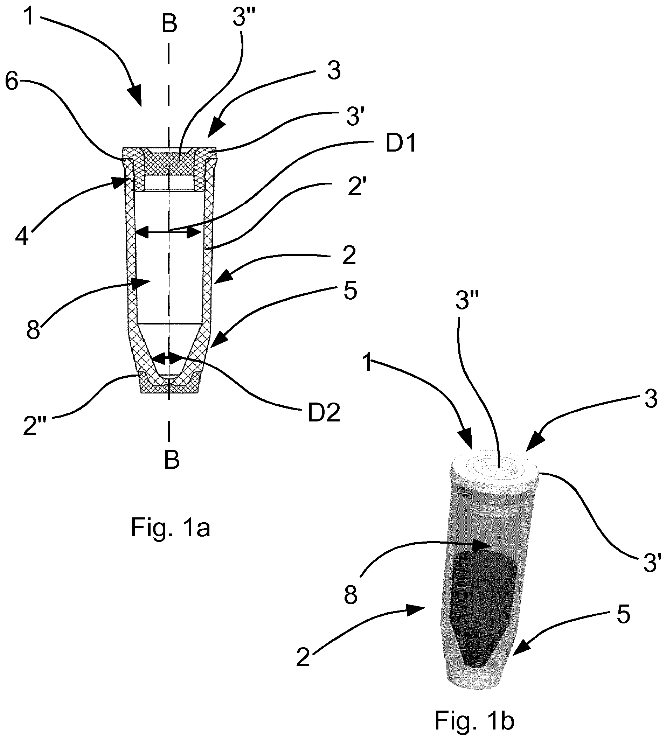

Fig. 1a zeigt einen Längsschnitt durch ein erfindungsgemässes Vial 1. Figur 1b zeigt eine Aussenansicht desselben Vials 1. Das Vial 1 weist einen Körper 2 und einen Deckel 3 auf. Der Deckel 3 ist in ein offenes Ende des Körpers 2 eingesetzt, um das Vial 1 zu verschliessen.

Der Deckel 3 ist aus zwei Komponenten 3', 3" gebildet, welche sich in ihrer Shore-Härte unterscheiden. Der Deckel 3 ist mit einem 2 K Spritzgussverfahren hergestellt. Die shore-härtere Komponente 3' ist ein Polypropylen. Die shore-weichere Komponente 3" ist ein thermoplastisches Elastomer mit einer Shore-Härte von 40 Shore A nach ISO 7619 gemessen. Die shore-weichere Komponente 3" ist in einem Bereich des Deckels 3, welcher in den Körper 2 einbringbar ist, in Umfangsrichtung komplett von der shore-härteren Komponente 3' umgeben. In einem oberen Ende des Deckels 3, läuft die shore-weichere Komponente 3" hingegen radial nach aussen (siehe Fig. 1b). Die Shore-weichere Komponente 3" erstreckt sich nur über eine Teilstrecke in Richtung der Längsachse des Vials 1 der shore-härteren Komponente 3'. Ein in Richtung geschlossenes Ende zeigendes Ende des Deckels 3, wird nur von der shore-härteren Komponente 3' gebildet, welche einen zusätzlichen, auf einer Seite offenen Hohlraum bildet.

Die shore-weichere Komponente 3" weist eine Dimension von 4.5 mm in Richtung einer Längsachse B des Vials 1 und 2 mm in einer Richtung senkrecht zur Längsachse B des Vials 1 auf. Die shore-weichere Komponente 3" erlaubt eine Penetration des Deckels mit einer Kanüle zur Probeentnahme. Nach Entfernung der Kanüle aus dem Deckel 3, verschliesst die shore-weichere Komponente 3" die Durchtrittsöffnung automatisch. Vor einer Penetration mit der Kanüle ist das Vial 1 gegenüber 5 bar Innendruck dicht. Nach der Penetration ist das Vial immer noch gegenüber 2 bar Innendruck dicht.

Eine Verbindung zwischen Deckel 3 und Körper 2 wird zusätzlich durch einen Formschluss in Form einer Schnappverbindung 4 verbessert. Die Schnappverbindung 4 wird durch einen Wulst an der Innenfläche des Körpers 2 und eine Einkerbung an der Aussenfläche des Deckels 3 gebildet.

Der Körper 2 wird durch zwei Kunststoffkomponenten 2', 2" gebildet. Beide Komponenten 2', 2" sind Polypropylen, wobei eine Komponente 2" opak ausgebildet ist. Der Körper 2 ist wiederum mit einem 2 K Spritzgussverfahren gebildet. Die opake Komponente 2" ist an einem geschlossenen Ende des Körpers 2 angeordnet. An ihrer vom Körper 2 wegweisenden Fläche weist die opake Komponente einen Data Matrix Code (nicht gezeigt) auf. Der Code dient der Identifizierung des Vials. Dadurch kann das Vial im Rohrsystem automatisch zugeordnet und bearbeitet werden.

Am offenen Ende weist der Körper 2 einen Flansch 6 auf, welcher durch die nicht opake Polypropylenkomponente 2' gebildet ist. Der Flansch 6 stellt sicher, dass sich im Rohrsystem nicht zwei Vials 1 mit ihren Deckeln 3 verhaken. Das Vial 1 besitzt beim Flansch 6 nahezu denselben Aussendurchmesser wie der Deckel 3, so dass praktisch keine zusätzliche Kante gebildet wird. Am geschlossenen Ende verläuft die Aussenwand in einem Abschnitt 5 konisch. Der Abschnitt weist eine Konizität von 10 ° auf. Der obere Abschnitt weise eine geringe Konizität von 2° auf.

Zudem ist ein Hohlraum 8 innerhalb des Körpers 2 vorhanden. Der Hohlraum 8 dient der Aufnahme von Samples, welche im Rohrsystem transportiert werden und weist ein Füllvermögen von 350 µl auf. Der Hohlraum 8 weist im unteren Viertel einen inneren konischen Abschnitt mit einer Konizität von 33° auf. Der obere Teil hat dadurch einen wesentlich grösseren Durchmesser D1 als der Hohlraum am geschlossenen Ende D2. Der Durchmesser D2 ist exemplarisch an einer einzelnen Stelle gezeigt, da der konische Abschnitt nicht einen einzelnen Durchmesser aufweist.

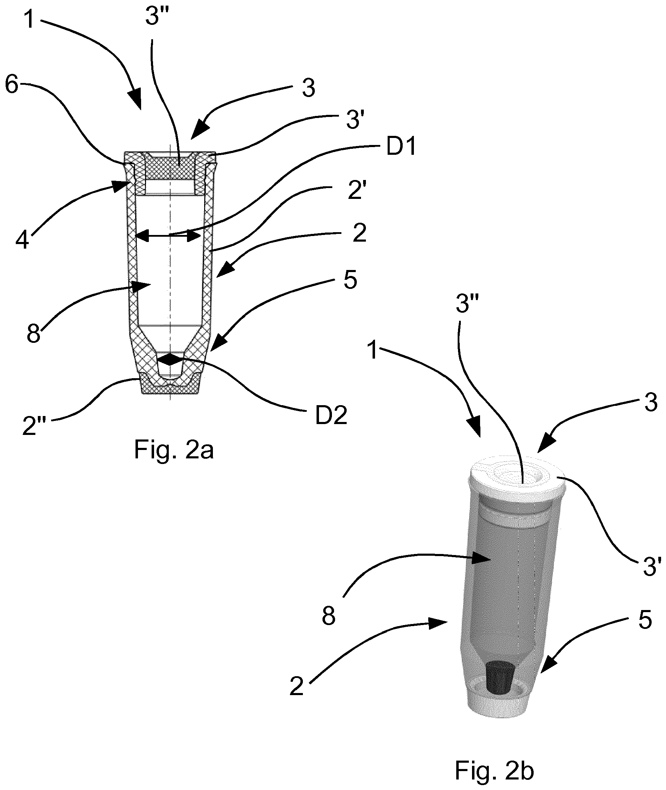

Die Figuren 2a und 2b zeigen eine alternative erfindungsgemässe Ausführungsform eines Vials 1. Das Vial 1 der Figuren 2a und 2b unterscheidet sich im Wesentlichen dadurch, dass der Hohlraum 8 im unteren Viertel eine höhere Konizität von 34° aufweist. Zudem besitzt der Hohlraum im untersten Abschnitt einen etwa zylindrischen Abschnitt. Dadurch besitzt der Hohlraum 8 der Figur 2 ein Volumen von nur 200 ul. Das Vial 1 der Figuren 2a und 2b besitzt jedoch dieselben Aussendimensionen wie das Vial 1 der Figuren 1a und 1b.

Die Geometrie des Hohlraums 8 der Figur 2 erlaubt das Befüllen mit geringen Mengen. Die kleinen Mengen werden sich im untersten, zylindrischen Abschnitt des Hohlraums 8 absetzen. Durch den kleinen Durchmesser D2 des Abschnitts wird aber trotz der geringen Menge eine gewisse Füllhöhe erreicht (siehe Fig. 2b). Dadurch kann sichergestellt werde, dass mit der Kanüle eine Probe entnommen werden kann, ohne dass die Kanüle bis ganz zum Boden eintreten muss.

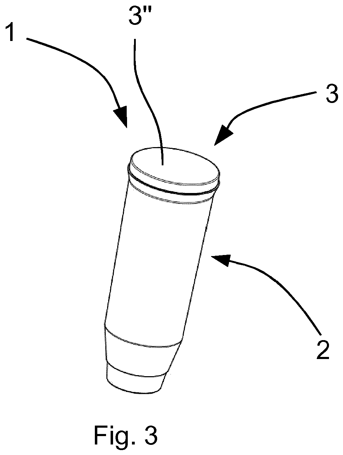

Figur 3 zeigt eine Aussenansicht eines alternativen erfindungsgemässen Vials 1. Das Vial 1 der Figur 3 unterscheidet sich von den Vials der Figuren 1a-2b dadurch, dass der Deckel 3 nur aus einer Komponente 3" besteht. Bei der Komponente 3" handelt es sich um das thermoplastische Elastomer, welches auch in den Deckeln der Figuren 1a-2b verwendet wird. Die Komponente 3" erlaubt den Eintritt einer Kanüle und ein nachfolgendes automatisches Abdichten der Eintrittsstelle.

## Patentansprüche

1. Vial (1) zur Verwendung in luftstrombetriebenen Rohrpostsystemen, umfassend einen Körper (2) und einen Deckel (3), wobei der Körper ein offenes Ende und ein geschlossenes Ende aufweist und der Deckel zumindest teilweise in das offene Ende des Körpers (2) einbringbar ist, um den Körper (2) zu verschliessen,
**dadurch gekennzeichnet, dass**
der Deckel (3) zwei Kunststoffkomponenten (3', 3") umfasst oder daraus besteht und sich die zwei Komponenten (3', 3") in ihrer Shore-Härte unterscheiden, wobei die Komponente mit (3") der niedrigeren Shore-Härte in einem Bereich des Deckels (3) radial innerhalb der Komponente (3') mit der höheren Shore-Härte angeordnet ist und wobei bevorzugt die shore-härtere Komponente (3') zumindest in einem Bereich des Deckels (3), welcher in den Körper (2) einbringbar ist, in Umfangsrichtung ohne Unterbrechung ausgebildet ist, wobei die Kunststoffkomponente (3', 3") mit der niedrigeren Shore-Härte eine Shore-Härte aufweist, welche eine Penetration mit einer Kanüle und ein automatisches Verschliessen des Durchstichs nach Entfernung der Kanüle erlaubt und so ausgebildet ist, dass der Durchstich nach einer Penetration mit einer Kanüle mit einem Durchmesser von 2 mm mindestens nach Entfernung der Kanüle bis 2 bar Innendruck des Vials dicht ist.

2. Vial (1) nach Anspruch 1, wobei die shore-weichere Komponente (3") zumindest teilweise in dem Bereich des Deckels (3), welcher in den Körper (2) einbringbar ist, in Umfangsrichtung von der shore-härteren Komponente (3') umgeben ist.

3. Vial (1) nach Anspruch 1 oder 2, wobei die shore-härtere Komponente (3`) ein Polypropylen und die shore-weichere Komponente (3") ein thermoplastisches Elastomer, vorzugsweise mit einer Shore-Härte im Bereich von 35-48 Shore A, nach ISO 7619 gemessen, ist.

4. Vial (1) nach Anspruch 1, 2 oder 3, wobei die shore-weichere Komponente (3") in einer Richtung senkrecht zu einer Längsachse des Vials (1) eine Dimension von 3-6 mm, bevorzugt 4.5 mm, und in Richtung der Längsachse des Vials (1) eine Dimension von 1-4 mm, bevorzugt 2 mm, aufweist.

5. Vial (1) nach einem der vorhergehenden Ansprüche, wobei der Deckel (3) und der Körper (2) so ausgebildet sind, dass der Deckel (3) und der Körper (2) über einen Schnappverschluss (4) in Wirkverbindung treten können.

6. Vial (1) nach Anspruch 5, wobei der Schnappverschluss (4) durch eine Einkerbung in Umfangsrichtung im Deckel (3) und einem Wulst im Körper (2) gebildet wird.

7. Vial (1) nach einem der vorhergehenden Ansprüche, wobei zumindest eine äussere Oberfläche des Deckels (3), welche in den Körper (2) einbringbar ist, sowie eine innere Oberfläche des Körpers (2), welcher mit dem Deckel (3) in Kontakt kommen kann im Wesentlichen glatt und ohne in Richtung der Längsachse des Vials (1) verlaufende Kanten ausgebildet sind.

8. Vial (1) nach einem der vorhergehenden Ansprüche, wobei der Körper (2) zumindest einen konisch zulaufenden Abschnitt (5) auf der Aussenseite aufweist und wobei der zumindest eine konische Abschnitt (5) das geschlossene Ende aufweist oder benachbart dazu angeordnet ist.

9. Vial (1) nach Anspruch 8, wobei die Konizität in einem unteren Viertel des Vials (1) 10-15° und/oder in einem oberen Teil des Vials (1) 1-5° beträgt.

10. Vial (1) nach einem der vorhergehenden Ansprüche, wobei der Körper (2) an einer Aussenfläche einen Flansch (6) am offenen Ende aufweist.

11. Vial (1) nach einem der vorhergehenden Ansprüche, wobei der Körper (2) zwei Kunststoffkomponenten (2', 2") umfasst oder daraus besteht, wobei zumindest eine Komponente (2") voll deckend oder opak ausgebildet ist und am geschlossenen Ende des Körpers angeordnet ist und diese zumindest eine voll deckende oder opake Komponente (2") einen Code, vorzugsweise einen 2D-Barcode, besonders bevorzugt einen Data Matrix Code, zur Identifizierung aufweist.

12. Vial (1) nach einem der vorhergehenden Ansprüche, wobei das Vial (1) ein Aufnahmevermögen von maximal 350 µl aufweist.

13. Verfahren zum Transport von Vials (1) in einem Röhrensystems mit Luftstrom, **dadurch gekennzeichnet, dass** ein Vial (1) nach einem der vorhergehenden Ansprüche verwendet wird.

## Claims

1. A vial (1) for use in airflow-driven pneumatic tube systems comprising a body (2) and a lid (3), the body having an open end and a closed end and the lid being at least partially insertable into the open end of the body (2) to seal the body (2),
**characterized in that**
the lid (3) comprises or consists of two plastic components (3', 3'') and the two components (3', 3'') differ in their Shore hardness, wherein the component (3'') with the lower Shore hardness is arranged in a region of the lid (3) radially inside the component (3') with the higher Shore hardness and wherein preferably the Shore-harder component (3') is arranged at least in a region of the lid (3) which is insertable into the body (2), is formed in the circumferential direction without interruption, the plastic component (3', 3'') with the lower Shore hardness having a Shore hardness which permits penetration with a cannula and automatic sealing of the puncture after removal of the cannula and being formed in such a way that the puncture is tight after penetration with a cannula with a diameter of 2 mm at least after removal of the cannula up to 2 bar internal pressure of the vial.

2. The vial (1) according to claim 1, wherein the shore-softer component (3'') is at least partially surrounded by the shore-harder component (3') in the circumferential direction in the region of the lid (3) which is insertable into the body (2).

3. The vial (1) according to claims 1 or 2, wherein the shore-harder component (3') is a polypropylene and the shore-softer component (3'') is a thermoplastic elastomer, preferably with a Shore hardness in the range of 35-48 Shore A, measured according to ISO 7619.

4. Vial (1) according to claims 1, 2 or 3, wherein the shore-soft component (3'') has a dimension of 3-6 mm, preferably 4.5 mm, in a direction perpendicular to a longitudinal axis of the vial (1) and a dimension of 1-4 mm, preferably 2 mm, in the direction of the longitudinal axis of the vial (1).

5. Vial (1) according to one of the preceding claims, wherein the lid (3) and the body (2) are formed in such a way that the lid (3) and the body (2) can enter into operative connection via a snap closure (4).

6. Vial (1) according to claim 5, wherein the snap closure (4) is formed by a notch in circumferential direction in the lid (3) and a bead in the body (2).

7. Vial (1) according to one of the preceding claims, wherein at least an outer surface of the lid (3), which is insertable into the body (2), and an inner surface of the body (2), which can come into contact with the lid (3), are formed substantially smooth and without edges running in the direction of the longitudinal axis of the vial (1).

8. The vial (1) according to any one of the preceding claims, wherein the body (2) comprises at least one tapered section (5) on the outside, and wherein the at least one tapered section (5) comprises the closed end or is arranged adjacent thereto.

9. The vial (1) according to claim 8, wherein the conicity in a lower quarter of the vial (1) is 10-15° and/or in an upper part of the vial (1) is 1-5°.

10. The vial (1) according to any one of the preceding claims, wherein the body (2) has a flange (6) at the open end on an outer surface.

11. Vial (1) according to one of the preceding claims, wherein the body (2) comprises or consists of two plastic components (2', 2''), wherein at least one component (2'') is formed fully covering or opaque and is arranged at the closed end of the body and this at least one fully covering or opaque component (2'') has a code, preferably a 2D barcode, particularly preferably a Data Matrix code, for identification.

12. Vial (1) according to one of the preceding claims, wherein the vial (1) has a maximum capacity of 350 µl.

13. Method for transporting vials (1) in a tubular system with air flow, **characterized in that** a vial (1) according to one of the preceding claims is used.

## Revendications

1. Vial (1) destiné à être utilisé dans des systèmes de transport pneumatique, comprenant un corps (2) et un couvercle (3), le corps ayant une extrémité ouverte et une extrémité fermée, le couvercle étant au moins partiellement introduisible dans l'extrémité ouverte du corps (2) pour fermer le corps (2),
**caractérisé en ce que**
le couvercle (3) comprend ou est constitué de deux composants plastiques (3', 3'') et les deux composants (3', 3'') se distinguent par leur dureté Shore, le composant (3'') de dureté Shore inférieure étant disposé dans une zone du couvercle (3) radialement à l'intérieur du composant (3') de dureté Shore supérieure et, de préférence, le composant (3') de dureté Shore supérieure étant disposé au moins dans une zone du couvercle (3) qui peut être introduisible dans le corps (2), étant formé dans la direction circonférentielle sans interruption, le composant plastique (3', 3'') de dureté Shore inférieure présentant une dureté Shore qui permet une pénétration avec une canule et une fermeture automatique de la ponction après retrait de la canule et étant formé de telle sorte que la ponction est étanche après une pénétration avec une canule d'un diamètre de 2 mm au moins après retrait de la canule jusqu'à 2 bars de pression interne du Vial.

2. Vial (1) selon la revendication 1, dans lequel le composant (3'') plus souple au niveau du shore est entouré au moins partiellement dans la zone du couvercle (3) qui peut être introduite dans le corps (2), dans la direction circonférentielle, par le composant (3') plus dur au niveau du shore.

3. Vial (1) selon la revendication 1 ou 2, dans lequel le composant plus dur au toucher (3') est un polypropylène et le composant plus souple au toucher (3'') est un élastomère thermoplastique, de préférence avec une dureté Shore dans la plage de 35-48 Shore A, mesurée selon ISO 7619.

4. Vial (1) selon la revendication 1, 2 ou 3, dans lequel le composant plus mou du shore (3'') présente une dimension de 3 à 6 mm, de préférence de 4,5 mm, dans une direction perpendiculaire à un axe longitudinal du Vial (1) et une dimension de 1 à 4 mm, de préférence de 2 mm, dans la direction de l'axe longitudinal du Vial (1).

5. Vial (1) selon l'une des Revendications précédentes, dans lequel le couvercle (3) et le corps (2) sont formés de telle sorte que le couvercle (3) et le corps (2) peuvent entrer en liaison active par l'intermédiaire d'une fermeture à enclenchement (4).

6. Vial (1) selon la revendication 5, dans lequel la fermeture à enclenchement (4) est formée par une encoche dans la direction circonférentielle dans le couvercle (3) et un bourrelet dans le corps (2).

7. Vial (1) selon l'une quelconque des Revendications précédentes, dans lequel au moins une surface extérieure du couvercle (3), qui peut être introduisible dans le corps (2), et une surface intérieure du corps (2), qui peut venir en contact avec le couvercle (3), sont formées essentiellement lisses et sans bords continus dans la direction de l'axe longitudinal du Vial (1).

8. Vial (1) selon l'une quelconque des revendications précédentes, dans lequel le corps (2) comprend au moins une section conique (5) sur l'extérieur, et dans lequel ladite au moins une section conique (5) comprend l'extrémité fermée ou est disposée de manière adjacente à celle-ci.

9. Vial (1) selon la revendication 8, dans lequel la conicité dans un quart inférieur du Vial (1) est de 10-15° et/ou dans une partie supérieure du Vial (1) est de 1-5°.

10. Vial (1) selon l'une des Revendications précédentes, dans lequel le corps (2) présente sur une surface extérieure une bride (6) à l'extrémité ouverte.

11. Vial (1) selon l'une des revendications précédentes, dans lequel le corps (2) comprend ou est constitué de deux composants plastiques (2', 2''), au moins un composant (2'') étant formé de manière pleinement couvrante ou opaque et étant disposé à l'extrémité fermée du corps, et cet au moins un composant (2'') pleinement couvrant ou opaque présentant un code, de préférence un code-barres 2D, plus préférentiellement un code Data Matrix, pour l'identification.

12. Vial (1) selon l'une des Revendications précédentes, le Vial (1) présentant une capacité d'absorption d'au plus 350 µl.

13. Procédé de transport de Vials (1) dans un système de tubes à flux d'air, **caractérisé en ce que** l'on utilise un Vial (1) selon l'une des Revendications précédentes.
